# EUROPEAN PATENT APPLICATION

(11) **EP 2 736 229 A1**
(43) Date of publication of application: **28.05.2014**
(21) Application number: 12382461.7
(22) Date of filing: 26.11.2012
(51) Int. Cl.: H04M 1/2745, H04M 3/493, G06Q 50/00

(54) **Method and system for updating data of an address book stored within a telecommunication device**

(71) Applicant: Telefonica S.A., 28013 Madrid (ES)
(72) Inventor: Neystadt, John (Eugene), 28013 Madrid (ES); Drori, Yossi, 28013 Madrid (ES)
(74) Representative: Gonzalez-Alberto Rodriguez, Natalia

(57) **Abstract**

A method and a system for updating data of an address book database stored within a telecommunication device.

The method receiving update data from an external source and selecting by a user of said telecommunication device which of said received data will be used for updating said address book database stored within said telecommunication device. The update data obtained by retrieving by an analyzer a list of communication detail records (CDRs) from a database server and processing them by means of a detection algorithm to generate a suggested list of contacts or update data; and sending to said telecommunication device said generated suggested list of contacts or update data, wherein said detection algorithm generate said suggested list of contacts or updates by at least identifying the relationship between at least two users maintaining a first telecommunication interaction through said communication system (D).

The system of the invention is adapted to implement the method of the invention.

Assuming user A uses the telecommunication device. An update of the address book with a new user D may be proposed to user A if user D is found as having had contact with at least two users B and C to which user A already had a first contact, i.e. a first telecommunication interaction.

## Description

### Field of the art

The present invention generally relates to telecommunication services, and more particularly to a method and system for updating data of an address book stored within a telecommunication device.

### Prior State of the Art

An address book is a database used for storing entries called contacts. Each contact entry usually consists of a few standard fields (for example: first name, last name, company name, address, telephone number, e-mail address, fax number, mobile phone number).

Currently, most people have many different address books: their email accounts, their mobile phone, and the "friends lists" on their social networks. A network address book allows them to organize and manage all of their address books through a single interface and share their contacts across their different address books and social networks.

Mobile phone users struggle to manually manage their contact list of people they communicate with and keeping them up-to date. Frequently one need to send a message to make a call to a person, but this person the person contact information is not available in user's address book.

Some prior art describe methods for managing contact lists, as for instance those used in social networks. A mobile social address book is a phonebook on a mobile device that enables subscribers to build and grow their social networks. The mobile social address book transforms the phone book on any standard mobile phone into a social networking platform that makes it easier for subscribers to exchange contact information. The mobile social address book is the convergence of personal information management (PIM) and social networking on a mobile device. While standard mobile phonebooks force users to manually enter contacts, mobile social address books automate this process by enabling subscribers to exchange contact information following a call or SMS. The contact information exchange occurs instantaneously and the user's phonebook updates automatically. Mobile social address books also provide dynamic updates of contacts if their numbers change over time.

Such functionality is available for a while in social networks, such as Facebook®, which offers to add a "friend" based on relationships with mutual friends; however this is not available for traditional 1:1 telecommunication services, such as mobile messaging, and phone or video calls.

Patent EP 1224790 *Search and replace features for handset phonebook discloses one of those methods for managing contact lists.* The system of the invention accepts a Short Message System data packet transmitted from a cell site to a mobile station and updates the contents of an address book located in non-volatile RAM within the mobile station. Upon the occurrence of an event, such as a change in the area code, the system automatically updates the phone book so that a person does not have to perform the tedious task of determining which exchange prefixes within an area code have been affected and then manually updating large numbers of address book entries.

The object of the present invention is to provide a method to automatically detecting contacts that a user of a telecommunications device may want to communicate with and automatically update the user's contact list or address book database stored within said telecommunications device. On contrary of patent EP 1224790, the present invention makes use of call detail records and other processing means for performing said updating.

A call detail record (CDR) is a file containing information about recent system usage such as the identities of sources (points of origin), the identities of destinations (endpoints), the duration of each call, the amount billed for each call, the total usage time in the billing period, the total free time remaining in the billing period, and the running total charged during the billing period. In a traditional telecommunications system, a CDR contains information about all the calls passing through the telephone exchange. The CDRs are generated by Automatic Message Accounting (AMA) and processed by the operations support system (OSS).

### Summary of the Invention

In accordance with this invention, the previous objective is obtained, in a first aspect, by providing a method for updating data of an address book database stored within a telecommunication device comprising receiving the update data from an external source and selecting a user of the telecommunication device which received data is used for updating said address book database stored within said telecommunication device.

On contrary to the known proposals, the method of the first aspect in order to obtain said update data performs the following steps:
- retrieving by an analyzer a list of communication detail records CDRs from a database server and processing them by means of a detection algorithm to generate a suggested list of contacts or update data; said CDRs being produced by a communication system (D) selected among a telephony, instant messaging and email from a telecommunication interaction between users; and
- sending to the telecommunication device the generated suggested list of contacts or update data.

The detection algorithm to generate the suggested list of contacts or updates at least identifies the relationship between at least two users based on communication historical data retrieved from said CDR database server.

The detection algorithm can identify said relationship when the user initiating a first telecommunication interaction includes a reference to the user receiving said first telecommunication interaction in their contact list.

On the other hand, it can also identify the relationship if the first telecommunication interaction has been repeated between said at least two users over an interval of time. For instance, if the interactions or calls have been repeated three times over one month.

Moreover, the detection algorithm can identify the relationship by taking into account if at least another user, maintains telecommunication interactions with at least two of said users receiving the first telecommunication interaction.. .. According to an embodiment, the user initiating the first telecommunication interaction can control if said at least another user will be suggested as a contact. Moreover, the at least another user can be automatically added as a contact in the suggested list of contacts or update data, and/or can even be kept in a separated list and further included in the suggested list of contacts or update data when he/she will be maintaining a telecommunication interaction with the user initiating the first telecommunication interaction.

In yet another embodiment only the users having the best identified relationship are suggested as contacts.

The invention in a second aspect also relates to a for updating data of an address book database stored within a telecommunication device, the system comprising means for receiving update data from an external source and means for allowing a user of said telecommunication device to select which of said received data will be used for updating said address book database stored within said telecommunication device.

The system in a characteristic manner for updating said data further comprises an analyzer adapted to retrieve a list of communication detail records CDRs from a database server and to process them by means of a detection algorithm to generate a suggested list of contacts or update data; said CDRs being produced by a communication system (D) selected among a telephony, instant messaging and email from a telecommunication interaction between users.

The system of the second aspect of the invention is adapted to implement the method of the first aspect.

### Brief Description of the Drawings

The previous and other advantages and features will be more fully understood from the following detailed description of embodiments, with reference to the attached, which must be considered in an illustrative and non-limiting manner, in which:
Figure 1 is an illustration of the overall system used for the method of the present invention in order to automatically detect contacts that a user may want to communicate with and offer to add them to user's contact list or address book.
Figure 2 is a diagram for the group detection algorithm used by the method and the computer program of the present invention.

### Detailed Description of Several Embodiments

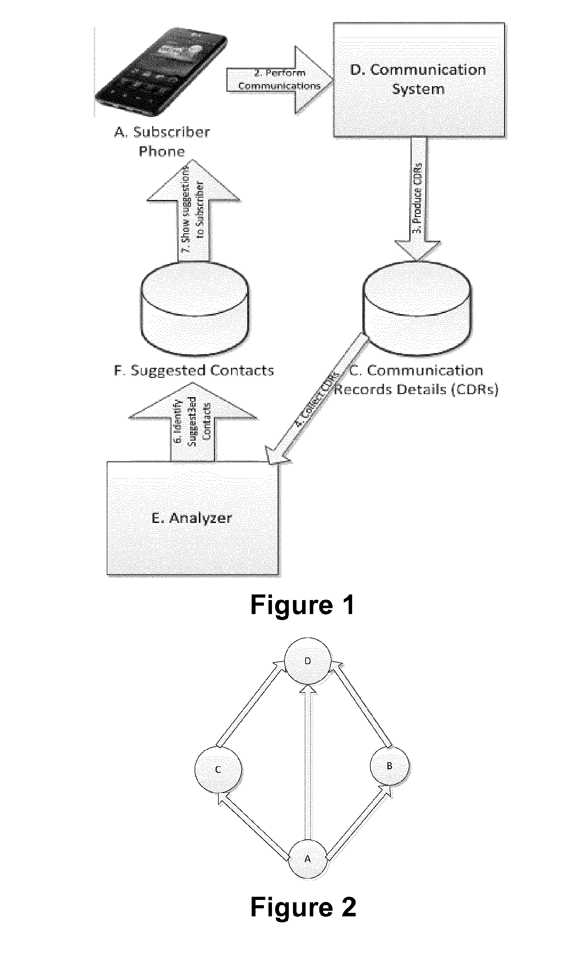

Figure 1 show the overall mechanism used by the method in the present invention. When users (A) want to communicate (2) with other users, using communication system (D), such as telephony, instant messaging, email, or other, the communication system typically produces (3) a list of communication detail records (CDR) and store them in a database C.

Then, Contact Analyzer (E), will process the CDRs (4), according to contact detection algorithm and identify (6) suggested contacts (F) for each user. The application (A) then needs to obtain (7) these contacts via one of existing means, and display them to the user, offering to add them to the address book database. Optionally to protect privacy of the contact information, an approval to disclose the contact to user A, may be requested from the identified suggested contact

Figure 2 shows a communication graph for the group detection algorithms. Identify relationships:

For each user in the system, a list of relationships needs to be identified according to the following:

### Identifying a relationship:

A relationship between user A and user B (A → B) can be identified:
1. Either explicitly, when user A includes reference to user B in his contact list.
2. Implicitly, by seeing that user A has performed a configurable number of communications with user B over configurable interval of time (e.g. 3 calls over one month).

### Identifying additional relationships:

If a configurable number (e.g. 2) of users to which user A has relationship (e.g. B → D, and C → D), also have a relation to user D, then D should be added to a list of relationships (A → D). The configuration number can be system-wised for instance controlled by user (A) or determined dynamically, offering only the top and or the best N likely relationships to user A.

Some possible usages for detecting suggested contacts could be for instance:
1) Offer a user to add them to his contacts.
2) Automatically add them to his contacts
3) Maintain as a separate list, and include when user looks for a contact when communicating or receiving a communication.

The foregoing describes embodiments of the present invention and modifications, obvious to those skilled in the art can be made thereto, without departing from the scope of the present invention.

## Claims

1. A method for updating data of an address book database stored within a telecommunication device, comprising receiving update data from an external source and selecting a user of said telecommunication device which of said received data will be used for updating said address book database stored within said telecommunication device, **characterized in that** said update data are obtained performing the following steps:
- retrieving by an analyzer a list of communication detail records (CDRs) from a database server and processing them by means of a detection algorithm to generate a suggested list of contacts or update data; said CDRs being produced by a communication system (D) selected among a telephony, instant messaging and email from a telecommunication interaction between users; and
- sending to said telecommunication device said generated suggested list of contacts or update data,
wherein said detection algorithm generate said suggested list of contacts or updates by at least identifying the relationship between at least two users based on communication historical data retrieved from said CDR database server.

2. A method according to claim 1, **characterized in that** said detection algorithm identifies said relationship when the user initiating a first telecommunication interaction includes a reference to the user receiving said first telecommunication interaction in their contact list.

3. A method according to claim 1, comprising identifying said relationship by said detection algorithm if said first telecommunication interaction has been repeated between said at least two users over an interval of time.

4. A method according to claim 1, **characterized in that** said detection algorithm further identifies said relationship if at least another user maintains telecommunication interactions with at least two of said users receiving said first telecommunication interaction.

5. A method according to claim 4, **characterized in that** said user initiating said first telecommunication interaction controls if said at least another user is suggested as a contact.

6. A method according to claim 4, **characterized in that** said at least another user is automatically added as a contact in said suggested list of contacts or update data.

7. A method according to claim 4, comprising keeping in a separated list said at least another user and further including said at least another user in said suggested list of contacts or update data when said user initiating said first telecommunication interaction and said at least another user maintains a telecommunication interaction.

8. A method according to claim 4, **characterized in that** only the users having the best identified relationship are suggested as contacts.

9. A system for updating data of an address book database stored within a telecommunication device, comprising means for receiving update data from an external source and means for allowing a user of said telecommunication device to select which of said received data will be used for updating said address book database stored within said telecommunication device, **characterized in that** it further comprises for updating said data an analyzer adapted to retrieve a list of communication detail records (CDRs) from a database server and to process them by means of a detection algorithm to generate a suggested list of contacts or update data; said CDRs being produced by a communication system (D) selected among a telephony, instant messaging and email from a telecommunication interaction between users.

10. A system according to claim 9, **characterized in that** is adapted to implemented the method of claims 1 to 8.
